# DEMANDE DE BREVET EUROPEEN

(11) **EP 0 853 109 A1**
(43) Date de publication de la demande: **15.07.1998**
(21) Numéro de dépôt: 97390009.5
(22) Date de dépôt: 23.12.1997
(51) Int. Cl.: C09D 127/06, C08K 3/34

(54) **Composition plastisol applicable à froid et gélifiable à chaud, et procédé de formulation**

(30) Priorité: 09.01.1997 FR 9700266
(71) Demandeur: TALC DE LUZENAC Société Anonyme, F-09250 Luzenac sur Ariege (FR)
(72) Inventeur: Guillon, Didier, 31120 Roques (FR); Pauly, Jean-Jacques, 09100 Pamiers (FR)
(74) Mandataire: Cabinet BARRE LAFORGUE & associés

(57) **Abrégé**

L'invention concerne une nouvelle formulation de composition plastisol applicable à froid et gélifiable à chaud, à base de polychlorure de vinyle (PVC) en suspension dans un plastifiant. Le procédé a pour objectif d'accroître la résistance au cisaillement après cuisson d'une composition plastisol de référence de type classique (comprenant, outre le PVC et le plastifiant, du carbonate précipité et un agent épaississant), tout en conservant un seuil de coulure équivalent. Il consiste à remplacer dans la composition de référence le carbonate précipité ou une fraction de celui-ci par un pourcentage pondéral équivalent de talc, et à réduire le pourcentage de plastifiant et augmenter le pourcentage d'agent épaississant, de façon à corriger la variation du seuil de coulure induite par la substitution carbonate/talc précitée. L'invention permet de limiter ou de supprimer le carbonate précipité qui est un produit cher, tout en améliorant la résistance au cisaillement de la composition après cuisson.

## Description

L'invention concerne un procédé de formulation d'une composition plastisol à base de polychlorure de vinyle (PVC) en suspension dans un plastifiant, du type applicable à froid et gélifiable à chaud. Le procédé de l'invention vise à réduire, à seuil de coulure équivalent, la quantité de carbonate précipité contenue dans ce type de composition plastisol. Le plastifiant est en particulier constitué dans les compositions plastisols de ce type par un composé du groupe suivant : phtalate : dioctylphtalate (DOP), diisodécylphtalate (DIDP), diisooctylphtalate (DIOP), (DINP)... ; adipate : dioctyladépate (DOA), diisodecyladépate (DIOA)... L'invention s'étend à de nouvelles compositions plastisols applicables à froid et gélifiables à chaud, qui possèdent une proportion de carbonate précipité nulle ou réduite par rapport aux compositions connues, tout en présentant un seuil de coulure satisfaisant.

Les compositions plastisols du type précité sont bien connues, en particulier dans le secteur de l'automobile, et sont généralement utilisées sous forme de pâte applicable à température ambiante par buse ou rouleau, la cuisson étant assurée en décalé ; ces compositions permettent de réaliser des revêtements protecteurs ou des joints étanches, par exemple revêtement protecteur de dessous de caisse automobile, joint étanche entre pièces. Ces compositions plastisols contiennent du PVC, un plastifiant et des additifs : agent épaississant tel que la silice pyrogénée pour ajuster la viscosité de la composition, carbonate précipité tel que carbonate de calcium précipité traité à l'acide pour ajuster le seuil de coulure de la composition. Ces compositions plastisols se caractérisent par le taux pondéral de PVC qui reste toujours minoritaire, généralement inférieur ou égal à 40%, le ratio pondéral PVC/plastifiant sensiblement compris entre 0,6 et 1, 2 et la nature des additifs présents tels que carbonate précipité. De par leurs caractéristiques rhéologiques, de telles compositions plastisols sont adaptées pour être appliquées à froid sur les éléments à revêtir, avant d'être gélifiées à chaud par une cuisson décalée dans le temps. En outre, en fonction de l'application, la composition plastisol peut contenir certains composants tels que carbonate naturel constituant une charge passive qui abaisse le prix de revient.

Le carbonate précipité, généralement carbonate de calcium précipité traité (CCPT), est un additif essentiel de ce type de plastisols, car il permet d'ajuster leur seuil de coulure à la valeur requise par l'application. Ce seuil de coulure représente la capacité de la composition plastisol à résister à la coulure après son application à froid, c'est-à-dire à éviter les phénomènes de coulure dûs à la gravité entre l'opération d'application et l'opération de cuisson décalée dans le temps. Dans toute la suite, ce seuil de coulure sera mesuré en pascals selon la norme PSA/RENAULT D 155 003. Ce seuil de coulure est un paramètre fondamental de ces compositions plastisols puisque celles-ci sont appelées à être utilisées comme revêtement ou joint, et que ce paramètre mesure la faculté d'obtenir un revêtement ou un joint de qualité, c'est-à-dire de géométrie et de dimensions données. Si le seuil de coulure est trop bas (par exemple inférieur à environ 100 à 150 pascals), la composition subit un fluage important après son application et devient en fait inutilisable (pertes de produit excessives, mauvaise jonction des pièces, aspects déficients, qualités insuffisantes de la protection...) Si le seuil de coulure est trop élevé (par exemple supérieur à environ 400), la composition plastisol devient difficile, voire impossible, à appliquer (non transportable dans des tuyauteries) et conduit à un revêtement non uniforme, présentant des cratères et des irrégularités inacceptables dans la plupart des applications.

Le moyen le plus efficace actuellement à la disposition de l'homme du métier pour ajuster le seuil de coulure d'une composition plastisol applicable à froid et gélifiable à chaud, à base de PVC en suspension dans un plastifiant, consiste à ajouter à la composition du carbonate précipité, la plupart du temps carbonate de calcium précipité traité (CCPT). Ce carbonate est fabriqué de façon classique par précipitation en milieu aqueux, suivie d'une filtration/séchage : cette précipitation conduit à un carbonate cristallisé dont les particules ont des tailles très faibles (diamètre moyen de l'ordre de 50 à 200 nm), comparées aux carbonates naturels broyés ; ces carbonates précipités subissent aussi généralement un traitement, notamment à l'acide (acide stéarique par exemple) pour en augmenter l'hydrophobie. Un tel carbonate précipité (souvent désigné par CPT : carbonate précipité traité) permet, de par sa fine structure cristalline, d'obtenir un seuil de coulure de valeur satisfaisante donnée, par un simple ajustement de la proportion de CPT dans la composition (proportion pondérale généralement comprise entre 10 et 30 % selon l'application). Il faut souligner qu'un carbonate broyé, dit carbonate naturel, ne permet pas de réaliser un tel réglage du seuil de coulure et constitue une simple charge passive qui est ajoutée dans certaines compositions pour abaisser le prix de revient. Dans le secteur automobile par exemple, (qui représente un secteur d'application important des plastisols applicables à froid et gélifiables à chaud), la quasi-totalité des formules standards de compositions plastisols contiennent les proportions précitées de carbonates précipités CPT.

Toutefois, le carbonate précipité CPT est un produit cher en raison des traitements nécessaires à sa fabrication ; compte tenu des proportions importantes nécessaires pour ajuster le seuil de coulure, il augmente très notablement le coût des compositions plastisols. Dans la plupart des secteurs où sont utilisées ces compositions plastisols (automobile notamment), le coût des matières premières est un facteur critique d'utilisation et le développement de ces plastisols est sensiblement freiné par le coût du CPT ajouté dans ceux-ci. Il faut souligner qu'il existe quelques produits de substitution du CPT, mais ces produits sont plus chers encore que le CPT et ne conduisent donc jamais à une réduction du prix de revient de la composition plastisol. En outre, généralement, ces produits de substitution réduisent les propriétés mécaniques de la composition après cuisson : ils conduisent en particulier à une baisse de la résistance au cisaillement.

Par ailleurs, de même que pour les produits de substitution, on observe que la présence de CPT dans une composition plastisol conduit à un affaiblissement dans le temps des performances mécaniques des produits obtenus après application et cuisson de la composition. Ce vieillissement prématuré (en comparaison à une composition exempte de CPT) est extrêmement gênant en pratique, que ce soit pour les utilisations comme revêtements protecteurs ou pour les utilisations comme joints d'étanchéité entre pièces.

Il semble également que la présence de CPT dans la composition plastisol ait une influence sur les conditions de mise en oeuvre de la composition, et rendent ces conditions plus contraignantes, en particulier pour ce qui concerne la température de cuisson de la composition après application : les propriétés mécaniques des produits obtenus après cuisson sont significativement affectées par des écarts de température par rapport à la température optimale de cuisson.

Il convient de noter qu'il existe d'autres types de plastisols qui sont appliqués à chaud dans des conditions adaptées pour réaliser simultanément leur cuisson. Par exemple, le brevet EU-0 554 174 décrit une composition plastisol à base de PVC et polymère fluoré pour constituer un isolant de câble électrique. Ces compositions ont des formulations très différentes (en particulier pourcentage majoritaire élevé de PVC) ; la gélification étant immédiate, elles ne sont soumises à aucune contrainte particulière de rhéologie et de seuil de coulure et ne contiennent pas de carbonate précipité. Il en est de même de certaines compositions plastisols particulières destinées à gélifier en feuilles ou couches sur un support horizontal, telles que compositions décrites dans le brevet US-3 379 674, ou brevet GB-1 161 766 qui ont des formulations très différentes du type de composition visé par l'invention, et sont utilisées dans des applications ne conduisant à aucun problème de rhéologie et seuil de coulure.

L'invention s'applique aux compositions plastisols applicables à froid et gélifiables à chaud, se caractérisant par un taux pondéral de PVC minoritaire (inférieur à 50%, et le plus souvent inférieur ou égal à 40%) et un ratio PVC/plastifiant sensiblement compris entre 0,6 et 1,2.

La présente invention se propose de réduire, et éventuellement d'annuler les quantités de CPT nécessaires dans les compositions plastisols connues de ce type, de façon à limiter ou supprimer les défauts précités dus à la présence de ce composé CPT, et ce, tout en conservant une valeur satisfaisante du seuil de coulure de la composition.

Un autre objectif est de permettre de formuler des compositions plastisols du type sus-visé ayant une résistance au cisaillement améliorée par rapport aux compositions comparables contenant du CPT.

Un autre objectif est de permettre de formuler des compositions plastisols du type sus-visé conduisant, après cuisson décalée, à des produits présentant un vieillissement limité par rapport à ceux réalisés au moyen des compositions comparables contenant du CPT.

Un objectif secondaire de l'invention est d'élargir les conditions thermiques d'application des compositions plastisols du type sus-visé.

Le procédé conforme à l'invention pour préparer une composition plastisol applicable à froid et gélifiable à chaud, à base de polychlorure de vinyle (PVC) en suspension dans au moins un plastifiant, part de la formulation d'une composition plastisol prédéterminée connue, dite composition de référence, présentant un seuil de coulure donné adapté à l'application envisagée, et contenant du PVC, un plastifiant, du carbonate précipité (CPT) et un agent épaississant, en quantités telles que le taux pondéral de PVC soit minoritaire et que le ratio pondéral PVC/plastifiant soit sensiblement compris entre 0,6 et 1,2, ; le procédé de l'invention se caractérise en ce que :
. on remplace dans la composition de référence au moins une fraction du carbonate précipité par un pourcentage pondéral équivalent de talc, la fraction de carbonate substituée par du talc étant au moins égale à 25 % du carbonate précipité de la composition de référence, le pourcentage pondéral de talc dans la composition demeurant inférieur ou égal à 30%,
. on réduit le pourcentage de plastifiant sans l'abaisser au-dessous de 22% et on augmente le pourcentage d'agent épaississant de façon à corriger la variation du seuil de coulure induite par la substitution précitée.

On entend par "talc" soit le minéral silicate de magnésium hydraté, soit le minéral chlorite (silicate de magnésium et d'aluminium hydraté), soit un mélange des deux, associé le cas échéant à d'autres minéraux (dolomite,...), soit encore, une substance talqueuse issue du talc et présentant des propriétés analogues.

Sauf indication contraire, tous les pourcentages, taux, ratios indiqués sont pondéraux.

Par "applicable à froid", on entend une application à température ambiante ou modérée, inférieure à la température de cuisson requise pour la gélification de la composition.

Par "gélifiable à chaud", on entend la propriété de la composition plastisol à passer de l'état pâteux à l'état solide lorsqu'elle est soumise à une température appropriée (dite température de cuisson). Les mécanismes mis en jeu lors de ce changement d'état sont les suivants : fusion du PVC à la température de cuisson, puis dissolution de celui-ci dans le plastifiant, l'état solide du plastisol étant atteint lors de cette dissolution (la composition plastisol est ensuite refroidie à température ambiante).

On a pu constater que la substitution partielle ou totale dans une formulation de plastisol du type visé du carbonate précipité (CPT) par du talc, dans les conditions ci-dessus définies, permet de conserver la valeur du seuil de coulure et conduit à une augmentation significative de la résistance au cisaillement après cuisson ; en outre, cette résistance au cisaillement demeure intacte après vieillissement (les tests de vieillissement étant du type test du cataplasme humide : norme PSA/RENAULT D 47 1165).

Ainsi, à seuil de coulure identique, le procédé de l'invention conduit, d'une part, à une économie de CPT (la fraction économisée étant remplacée par un composé de prix très inférieur n'exigeant aucun traitement spécifique préalable), d'autre part, à de meilleures propriétés mécaniques de la composition obtenue.

Pour la majorité des formulations, le pourcentage de plastifiant est réduit de 5 à 15 % par rapport à la formulation de référence, de façon à garder sensiblement entre 85 % et 95 % du pourcentage initial de plastifiant. Une réduction trop importante de la quantité de plastifiant (au-delà de 15%) peut entraîner un affaiblissement des propriétés mécaniques, cependant qu'une réduction trop faible (en-deça de 5 %) ne permet généralement pas d'obtenir un seuil de coulure satisfaisant.

Par ailleurs, le procédé de l'invention prévoit une augmentation du pourcentage d'agent épaississant de la composition ; dans la majorité des formulations, cette augmentation n'excède pas 2 fois le pourcentage de cet agent dans la composition de référence. Il faut souligner que le pourcentage d'agent épaississant des compositions de référence connues du type précité est généralement de l'ordre de 1 %, de sorte que l'augmentation quantitative d'agent épaississant (inférieure à 1 %) n'est pas pénalisante en pratique pour le prix de la composition.

Le procédé de l'invention conduit à des compositions plastisols applicables à froid et gélifiables à chaud, à base de plastifiant, polychlorure de vinyle (PVC), talc, agent épaississant et éventuellement carbonate précipité (CPT), qui peuvent être caractérisées par :
. une proportion pondérale de talc dans la composition supérieure ou égale à 10 %,
. une proportion pondérale de carbonate précipité inférieure ou égale à 10 %,
. une proportion pondérale de plastifiant inférieure ou égale à 34 %,
. un seuil de coulure de la composition compris entre 180 et 350 pascals,
. une résistance au cisaillement supérieure ou égale à 1,0 mégapascals, après cuisson et après vieillissement conforme au test du cataplasme humide (norme PSA/RENAULT D 47 1165).

Il est à noter que le brevet US 4 540 731 propose une composition plastisol dont la propriété est de gélifier à faible température ; à cet effet, cette composition comprend une forte proportion de plastifiant. La formulation proposée contient comme charge une faible proportion de mica ou de talc. Une telle composition présente un seuil de coulure très faible (bien inférieur à 200 pascals) en raison du taux de plastifiant élevé et du faible taux des composés thixotropes. En fait, le mica ou le talc ne constitue qu'une charge passive dans cette formulation et la composition est totalement inadaptée pour une application à froid avec cuisson décalée en raison de son taux de fluage beaucoup trop élevé après application. En outre, cette composition est onéreuse en raison de sa teneur en plastifiant (produit cher). Ce brevet US ne fournit donc aucune information suggérant à l'homme du métier que le talc est susceptible de jouer un rôle dans le contrôle du seuil de coulure, ni aucun enseignement pouvant conduire l'homme du métier à une solution satisfaisante au problème posé, à savoir réaliser une composition plastisol applicable à froid et gélifiable à chaud, peu onéreuse, ayant un seuil de coulure de valeur appropriée (en particulier : 180 - 350 pascals) et bénéficiant de bonnes propriétés mécaniques après cuisson.

Les essais ont montré qu'il était généralement possible de supprimer totalement le carbonate précipité (PCT) et de le remplacer par du talc, tout en préservant la valeur du seuil de coulure de la composition. Ce mode de mise en oeuvre avantageux du procédé permet de réduire au maximum le prix de la composition et d'accroître de façon optimale sa résistance au cisaillement.

Par ailleurs, l'utilisation d'un talc ayant les caractéristiques ci-dessous indiquées permet de limiter l'augmentation d'agent épaississant nécessaire et d'améliorer encore les propriétés mécaniques de la composition :
. répartition granulométrique du talc telle que le diamètre de coupure haute D99 est compris entre 20 et 30 microns, et que le diamètre moyen D50 est compris entre 4 et 6 microns,
. talc contenant au moins 85 % en poids de silicate de magnésium hydraté,
. talc de texture microcristalline présentant une surface spécifique (BET) supérieure à 8 m2/g.

Par "diamètre moyen D₅₀", on entend un diamètre tel que 50 % des particules en poids ont une taille inférieure audit diamètre ; par "diamètre de coupure haute D₉₉", on entend un diamètre tel que 99 % des particules en poids ont une taille inférieure audit diamètre. Pour des particules non sphériques, la taille est constituée par le diamètre sphérique équivalent (diamètre de Stockes). Toutes les mesures des diamètres D₅₀ et D₉₉ sont effectuées au moyen d'un appareil "Sédigraph" (marque déposée) par sédimentation par gravité conformément à la norme AFNOR X11-683.

Par "surface spécifique (BET)", on entend l'aire de la surface des particules de la poudre rapportée à l'unité de masse, déterminée selon la méthode BET par la quantité d'argon adsorbée à la surface des particules de façon à former une couche monomoléculaire recouvrant complètement ladite surface (mesure selon la méthode BET, norme AFNOR X 11 - 621 et 622).

La composition plastisol obtenue conformément à l'invention, peut, le cas échéant, être complétée par une ou des charges minérales passives connues, en particulier : carbonate naturel, mica, kaolin, sulfate de baryum. Une telle charge a pour fonction, dans certaines applications, d'abaisser le prix de revient de la composition, tout en permettant de respecter le cahier des charges (seuil de coulure, propriétés mécaniques).

Le plastifiant de la composition est un plastifiant de tout type connu, utilisé dans la formulation des plastisols, notamment un phtalate (DOP, DIDP, DIOP...) ou un adipate (DOA, DIOA...) qui sont les plus utilisés dans le secteur automobile et dans le bâtiment.

De façon analogue, l'agent épaississant est un épaississant de tout type connu, utilisé dans la formulation des plastisols, notamment la silice pyrogénée ou la bentonite.

L'invention vise en particulier une composition plastisol destinée à la réalisation de revêtements étanches ; cette composition comprend, en proportions pondérales, entre 22 % et 30 % de plastifiant, entre 16 % et 23 % de polychlorure de vinyle en suspension dans ledit plastifiant, entre 15 % et 35 % d'un carbonate naturel comme charge passive, entre 10 % et 20 % de talc, et une proportion de silice pyrogénée au plus égale à 1,5 %, ladite composition présentant un seuil de coulure compris entre 220 et 260 pascals, et une résistance au cisaillement comprise entre 1,0 et 2,0 mégapascals après cuisson et après vieillissement.

Une telle composition, de faible coût, est adaptée pour former une couche continue protectrice très résistante à l'eau qui évite toute pénétration d'humidité vers la surface des pièces qu'elle couvre ou dont elle assure la jonction ; elle peut en particulier être utilisée dans le secteur de l'automobile où son seuil de coulure permet une application facile et de qualité, avec cuisson décalée comme l'imposent les contraintes des chaînes de fabrication dans ce secteur.

L'invention vise également une composition plastisol destinée à la réalisation de revêtements protecteurs à l'égard de la corrosion et du gravillonnage ; cette composition fabriquée par dispersion et/ou malaxage comprend, en proportions pondérales, entre 28 % et 34 % de plastifiant, entre 28 % et 33 % de polychlorure de vinyle en suspension dans ledit plastifiant, entre 20 % et 30 % de talc, une proportion de silice pyrogénée au plus égale à 1,5 %, et éventuellement un carbonate naturel comme charge passive en proportion inférieure à 8 %, ladite composition présentant un seuil de coulure compris entre 250 et 350 pascals, et une résistance au cisaillement, comprise entre 1,0 et 2,0 mégapascals après cuisson et après vieillissement.

Une telle composition, de faible coût, (par rapport aux compositions ayant la même fonction) assure un amortissement des chocs et permet de protéger des pièces, notamment métalliques telles que dessous de caisse d'une automobile, contre la projection de gravillons ; elle réalise, en outre, une couche imperméable supprimant ou limitant les phénomènes de corrosion de ces pièces.

Les compositions conformes à l'invention sont essentiellement apliquées, de façon classique, par extrusion ou pulvérisation à travers une buse.

Les produits extrudés forment un boudin ou un bandeau qui permet, en particulier de remplir les espaces vides entre deux pièces, garantissant ainsi une étanchéité optimale. Ils donnent une bonne stabilité dimensionnelle grâce à leur seuil de coulure élevé et permettent une économie de matière et une diminution du poids total.

Les produits pulvérisés forment un revêtement continu, d'épaisseur majoritairement comprise entre 500 µm et 2 mm. Ils présentent une bonne adhérence au support et une forte résistance à la coulure (seuil de coulure élevé) avant cuisson. Ces revêtements après cuisson permettent de protéger le support contre nombre d'agressions mécaniques et chimiques.

L'invention est illustrée par les exemples qui suivent :

### Exemple 1 : Formulation de revêtement étanche plastisol

La formule de référence contenant du CCPT, ayant servi de base pour cet exemple, et la formule conforme à l'invention sont fournies dans le tableau ci-après :

| **COMPOSANTS** | **FORMULE DE REFERENCE** | | **INVENTION** | |
|---|---|---|---|---|
| | Poids (g) | Pourcentage ponderal (%) | Poids (g) | Pourcentage pondéral (%) |
| (1) Résine PVC | 160 | 20.34 | 160 | 21.24 |
| (2) CCPT | 112 | 14.23 | - | - |
| (3) Solvant | 40 | 5.08 | 40 | 5.31 |
| (4) DOP (plastifiant) | 240 | 30.50 | 204 | 27.08 |
| (5) Silice pyrogénée (épaississant) | 4.8 | 0.61 | 7.2 | 0.96 |
| (6) Promoteur d'adhérence | 16 | 2.03 | 16 | 2.12 |
| (7) Stabilisant | 4 | 0.51 | 4 | 0.53 |
| (8) Craie (charge passive) | 200 | 25.42 | 200 | 26.55 |
| (9) Chaux (absorbeur d'humidité) | 10 | 1.27 | 10 | 1.33 |
| (10) Talc | - | - | 112 | 14.87 |

| | | | | |
|---|---|---|---|---|
| (1) Homopolymère de chlorure de vinyl (index de viscosité : 125, valeur K :70). | | | | |
| (2) Carbonate de calcium précité et traité (particules comprises entre 60-90 nanomètres, traité à l'acide stéarique). | | | | |
| (3) Solvant : hydrocarbure désaromatisé (distillation comprise entre 200-250° C, point éclair : 78, indice KB : 30). | | | | |
| (4) DOP : Dioctyl phtalate. | | | | |
| (5) Silice pyrogénée hydrophobe (surface spécifique ∼ 200 m²/g). | | | | |
| (6) Promoteur d'adhérence (type polyamide). | | | | |
| (7) Stabilisant (type "Irgastab 17M Ciba Geigy", marque déposée). | | | | |
| (8) Craie : carbonate de calcium naturel (particule moyenne : 2,5 µm, particule maximale : 25 µm). | | | | |
| (9) Chaux : (CaO d'origine naturelle). | | | | |
| (10) Talc : . répartition granulométrique D₉₉ = entre 25 et 30 µm, D₅₀ = 5 µm, . constitué par au moins 90 % en poids de silicate de magnésium hydraté, . de texture microcristalline ayant une surface spécifique de 11 m²/g environ. Le remplacement direct de 112 g de CCPT par 112 g de talc, associé à : . une baisse du taux de DOP (plastifiant) amenant la quantité de ce composé à passer de 240 à 204 g (baisse de 15 %) dans la formule de la composition, . une augmentation du taux de silice pyrogénée (épaississant), amenant la quantité de ce composé à passer de 4,8 g à 7,2 g (soit 50 % de plus que la quantité initiale), permet d'obtenir un seuil de coulure de la composition égal à 210 Pa (inchangé). | | | | |

Une correction de viscosité est possible par ajustement du taux de solvant, si nécessaire. Dans cet exemple, le taux de solvant est inchangé.

Les modifications précitées permettent d'obtenir un plastisol chargé talc de comportement rhéologique équivalent à celui de la référence.

Les résistances au cisaillement du plastisol chargé talc sont les suivantes :

| **Résistance au cisaillement** | | | | |
|---|---|---|---|---|
| | Cuisson faible (MPa) | | Cuisson forte (MPa) | |
| | Formule de référence | Invention | Formule de référence | Invention |
| Après cuisson | 0,8 | 1.3 | 1.0 | 1.3 |
| Après vieillissement | 1.1 | 1.5 | 1.0 | 1.5 |

soit en pourcentage (base 100 % pour le plastisol chargé CCPT selon la formule de référence) :

| **Résistance au cisaillement** **Invention/Référence** | | |
|---|---|---|
| | Cuisson faible (%) | Cuisson forte (%) |
| Après cuisson | 132 | 151 |
| Après vieillissement | 145 | 153 |

Les résistances au cisaillement du plastisol chargé en talc sont donc très supérieures à celles du plastisol chargé en CCPT. De plus, ces résistances restent pratiquement constantes, que ce soit à cuisson forte ou après vieillissement. Celles du plastisol chargé CCPT diminuent dans ces deux cas.

Les cuissons faible et forte correspondent au passage dans une étuve d'éprouvettes recouvertes de plastisol durant un temps et à une température définis.

Dans cet exemple, la température et le temps moyen de cuisson sont d'environ 150° C ± 10° C et 45 min ± 15 min. Ceci se traduit par une cuisson faible de 140° C durant 30 min et par une cuisson forte de 160° C durant 60 min.

Le mode de rupture d'adhésion est identique, que le plastisol contienne du CCPT ou du talc.

Les allongements à la rupture sont les suivants :

| **Allongement à la rupture (mm)** | | | | |
|---|---|---|---|---|
| | Cuisson faible | | Cuisson forte | |
| | Formule de référence | Invention | Formule de référence | Invention |
| Après cuisson | 4.2 | 3.6 | 7.1 | 4.9 |
| Après vieillissement | 5.4 | 4.3 | 5.5 | 4.1 |

Les valeurs minimales d'allongement (cuisson faible avant vieillissement) sont similaires pour les deux types de plastisol. On note cependant une hétérogénéité des résultats du plastisol chargé CCPT, corrélée visuellement avec le début de dégradation des éprouvettes.

En conclusion, le plastisol conforme à l'invention et la composition de référence ont des seuils de coulure identiques permettant de les appliquer dans de bonnes conditions et la comparaison des matériaux obtenus après cuisson conduit aux constatations suivantes :
. la résistance au cisaillement est améliorée de 30 à 50 %,
. la résistance au cisaillement n'est pas influencée par le vieillissement ou une forte cuisson,
. l'allongement à la rupture est similaire à la référence,
. le mode de rupture est inchangé,
. enfin, le coût matière est significativement diminué. En effet, le prix du talc est inférieur de 35 à 50 % à celui du CCPT. Les économies sur le prix de revient du plastisol varient entre 3 et 6 voire 8%.

### Exemple 2 : Formulation de revêtement protecteur plastisol (gravillonnage, corrosion)

La formule de référence contenant du CCPT, ayant servi de base pour cet exemple, et la formule conforme à l'invention sont fournies dans le tableau ci-dessous :

| **COMPOSANTS** | **FORMULE DE REFERENCE** | | **INVENTION** | |
|---|---|---|---|---|
| | Poids (g) | Pourcentage ponderal (%) | Poids (g) | Pourcentage pondéral (%) |
| Résine PVC | 256 | 30.80 | 256 | 31.02 |
| CCPT | 184 | 22.14 | - | - |
| Solvant | 32 | 3.85 | 36 | 4.36 |
| DOP (plastifiant) | 280 | 33.69 | 266 | 32.23 |
| Silice pyrogénée | 4.8 | 0.58 | 9.0 | 1.09 |
| Promoteur d'adhérence | 16 | 1.92 | 16 | 1.94 |
| Stabilisant | 6.4 | 0.77 | 6.4 | 0.78 |
| Craie | 40 | 4.81 | 40 | 4.85 |
| Chaux | 12 | 1.44 | 12 | 1.45 |
| Talc | - | - | 184 | 22.29 |

Les composés utilisés sont identiques à ceux de l'exemple 1.

Le remplacement direct de 184 g de CCPT par 184 g de talc, associé à :
. une baisse du taux de DOP de 5 % (par rapport à la quantité initiale), soit une diminution de 280 g à 266 g,
. une augmentation du taux de silice pyrogénée de 4,8 g à 9 g (soit 87,5 % de plus que la quantité initiale), permet d'obtenir un seuil de coulure égal à 255 Pa (inchangé).

Une correction de viscosité est possible par ajustement du taux de solvant, si nécessaire. Dans cet exemple, le taux de solvant passe à 36 g.

Ces modifications permettent d'obtenir un plastisol chargé talc de comportement rhéologique identique à celui de la référence.

Les résistances au cisaillement du plastisol chargé talc sont les suivantes :

| **Résistance au cisaillement** | | | | |
|---|---|---|---|---|
| | Cuisson faible (MPa) | | Cuisson forte (MPa) | |
| | Formule de référence | Invention | Formule de référence | Invention |
| Après cuisson | 1.1 | 1.2 | 1.7 | 2.1 |
| Après vieillissement | 1.8 | 1.9 | 1.7 | 2.0 |

soit en pourcentage (base 100 % pour le plastisol chargé CCPT selon la formule de référence) :

| **Résistance au cisaillement** **Invention/Référence** | | |
|---|---|---|
| | Cuisson faible (%) | Cuisson forte (%) |
| Après cuisson | 105 | 125 |
| Après vieillissement | 103 | 134 |

Les résistances au cisaillement du plastisol chargé en talc sont donc égales ou supérieures à celles du plastisol chargé en CCPT.

Le mode de rupture d'adhésion est identique, que le plastisol contienne du CCPT ou du talc.

Les allongements à la rupture sont les suivants :

| **Allongement à la rupture (mm)** | | | | |
|---|---|---|---|---|
| | Cuisson faible | | Cuisson forte | |
| | Formule de référence | Invention | Formule de référence | Invention |
| Après cuisson | 4.7 | 3.1 | 7.2 | 4.8 |
| Après vieillissement | 6.0 | 4.1 | 6.6 | 4.4 |

En conclusion, pour un même seuil de coulure de la composition plastisol, la comparaison des matériaux obtenus avec la composition conforme à l'invention et la composition de référence conduit aux constatations suivantes :
. la résistance au cisaillement est améliorée à cuisson forte de plus de 25 %,
. l'allongement à la rupture est inférieur mais garde une valeur satisfaisante dans l'application visée (revêtement protecteur),
. le mode de rupture est inchangé,
. enfin, le coût matière est significativement diminué.

## Revendications

1. Procédé de préparation d'une composition plastisol applicable à froid et gélifiable à chaud, à base de polychlorure de vinyle (PVC) en suspension dans au moins un plastifiant, ledit procédé partant de la formulation d'une composition plastisol prédéterminée, dite de référence, comprenant le PVC, le plastifiant, du carbonate précipité et un agent épaississant, en quantités telles que le taux pondéral de PVC soit minoritaire et que le ratio pondéral PVC/plastifiant soit sensiblement compris entre 0,6 et 1,2, le procédé ayant pour objectif l'obtention d'une composition plastisol (1) présentant un seuil de coulure équivalent à celui de la composition de référence, (2) contenant un pourcentage nul ou plus faible de carbonate précipité et (3) possédant après cuisson une résistance au cisaillement accrue, ledit procédé étant caractérisé en ce que :
. on remplace dans la composition de référence au moins une fraction du carbonate précipité par un pourcentage pondéral équivalent de talc, la fraction de carbonate substituée par du talc étant au moins égale à 25 % du carbonate précipité de la composition de référence, le pourcentage pondéral de talc dans la formulation demeurant inférieur ou égal à 30 %,
. on réduit le pourcentage de plastifiant sans l'abaisser au-dessous de 22 % et on augmente le pourcentage d'agent épaississant, de façon à corriger la variation du seuil de coulure induite par la substitution précitée.

2. Procédé de préparation selon la revendication 1, caractérisé en ce qu'on remplace dans la composition de référence la totalité du carbonate précipité par un pourcentage pondéral équivalent de talc.

3. Procédé de préparation selon l'une des revendications 1 ou 2, caractérisé en ce qu'on utilise un talc :
. ayant une répartition granulométrique telle que le diamètre de coupure haute D99 est compris entre 20 et 30 microns, et que le diamètre moyen D50 est compris entre 4 et 6 microns,
. contenant au moins 85 % en poids de silicate de magnésium hydraté,
. de texture microcristalline présentant une surface spécifique supérieure à 8 m²/g.

4. Procédé de préparation selon l'une des revendications 1, 2 ou 3, caractérisé en ce qu'on réduit le pourcentage de plastifiant, de façon à garder entre 85 % et 95 % du plastifiant de la formule de référence.

5. Procédé de préparation selon l'une des revendications 1, 2, 3 ou 4, caractérisé en ce qu'on augmente le pourcentage d'agent épaississant de façon que celui-ci reste inférieur à 2 fois le pourcentage de cet agent dans la composition de référence.

6. Composition plastisol applicable à froid et gélifiable à chaud, comprenant au moins un plastifiant, du polychlorure de vinyle en suspension dans ledit plastifiant, du talc, un agent épaississant, et éventuellement un carbonate précipité, le taux pondéral de PVC étant minoritaire et le ratio pondéral PVC/plastifiant étant sensiblement compris entre 0,6 et 1,2, caractérisé en ce que :
. la proportion pondérale de talc dans la composition est comprise entre 10 % et 30 %,
. la proportion pondérale de carbonate précipité est inférieure ou égale à 10 %,
. la proportion pondérale de plastifiant est comprise entre 22 % et 34 %,
. le seuil de coulure de la composition est compris entre 180 et 350 pascals,
. la résistance au cisaillement est supérieure ou égale à 1,0 mégapascals, après cuisson et après vieillissement conforme au test du cataplasme humide (norme PSA/RENAULT D 47 1165).

7. Composition plastisol selon la revendication 6, caractérisé en ce qu'elle contient un talc:
. ayant une répartition granulométrique telle que le diamètre de coupure haute D99 est compris entre 20 et 30 microns, et que le diamètre moyen D50 est compris entre 4 et 6 microns,
. contenant au moins 85 % en poids de silicate de magnésium hydraté,
. de texture microcristalline présentant une surface spécifique supérieure à 8 m2/g.

8. Composition plastisol selon l'une des revendications 6 ou 7, dans laquelle le plastifiant est un phtalate ou un adipate.

9. Composition plastisol selon l'une des revendications 6, 7 ou 8, dans laquelle l'agent épaississant est de la silice pyrogénée ou de la bentonite.

10. Composition plastisol selon l'une des revendications 6, 7, 8 ou 9, contenant une charge minérale passive du groupe suivant : carbonate naturel, mica, kaolin, sulfate de baryum.

11. Composition plastisol conforme à la revendication 10 , en vue de la réalisation de revêtements étanches, comprenant, en proportions pondérales, entre 22 % et 30 % de plastifiant, entre 16 % et 23 % de polychlorure de vinyle en suspension dans ledit plastifiant, entre 15 % et 35 % d'un carbonate naturel, entre 10 % et 20 % de talc, et une proportion de silice pyrogénée au plus égale à 1,5 %, ladite composition présentant un seuil de coulure compris entre 220 et 260 pascals, et une résistance au cisaillement comprise entre 1,0 et 2,0 mégapascals après cuisson et après vieillissement.

12. Composition plastisol conforme à l'une des revendications 6, 7, 8, 9 et 10, en vue de la réalisation de revêtements protecteurs à l'égard de la corrosion et du gravillonnage, ladite composition fabriquée par dispersion et/ou malaxage comprenant, en proportions pondérales, entre 28 % et 34 % de plastifiant, entre 28 % et 33 % de polychlorure de vinyle en suspension dans ledit plastifiant, entre 20 % et 30 % de talc, une proportion de silice pyrogénée au plus égale à 1,5 %, et éventuellement un carbonate naturel en proportion inférieure à 8 %, ladite composition présentant un seuil de coulure compris entre 250 et 350 pascals, et une résistance au cisaillement, comprise entre 1,0 et 2,0 mégapascals après cuisson et après vieillissement.
